(19) Europäisches Patentamt

European Patent Office

Office européen des brevets

(11) **EP 0 862 772 B1**

(12) **EUROPÄISCHE PATENTSCHRIFT**

(45) Veröffentlichungstag und Bekanntmachung des Hinweises auf die Patenterteilung:
**12.02.2003 Patentblatt 2003/07**

(21) Anmeldenummer: **96939105.1**

(22) Anmeldetag: **20.11.1996**

(51) Int Cl.$^7$: **G08B 15/00**

(86) Internationale Anmeldenummer:
**PCT/EP96/05110**

(87) Internationale Veröffentlichungsnummer:
**WO 97/019430 (29.05.1997 Gazette 1997/23)**

(54) **VERFAHREN ZUR ANWESENHEITSSIMULATION**

METHOD FOR SIMULATING THE PRESENCE OF PEOPLE

PROCEDE POUR LA SIMULATION DE LA PRESENCE DE PERSONNES

(84) Benannte Vertragsstaaten:
**AT DE DK FR GB GR**

(30) Priorität: **21.11.1995 DE 19543380**

(43) Veröffentlichungstag der Anmeldung:
**09.09.1998 Patentblatt 1998/37**

(73) Patentinhaber: **Sonlux Licht- und
Elekroinstallation GmbH & Co. KG
Sondershausen
99706 Sondershausen (DE)**

(72) Erfinder: **EIDLOTH, Marc
D-96328 Küps (DE)**

(74) Vertreter: **Skora, Michael et al
Hofstetter, Schurack & Skora
Marsiliusstrasse 20
50937 Köln (DE)**

(56) Entgegenhaltungen:
**EP-A- 0 436 163        DE-U- 9 421 031**

**Beschreibung**

Die Erfindung betrifft ein Verfahren zur Anwesenheitssimulation mit mindestens einem automatisch betätigten Verbraucher.

Aus der Praxis ist es bekannt, zur Vermeidung von Einbrüchen in zeitweise unbenutzten oder unbewohnten Wohnungen oder anderen Räumen die Anwesenheit von Personen zu simulieren. Dazu werden in der Wohnung bzw. den Räumen, an Hauswänden oder in Gärten befindliche elektrische Verbraucher automatisch betätigt, so daß nach außen der Eindruck entsteht, die Verbraucher würden von den Bewohnern benutzt. Die Einbrüche verhindernde Wirkung dieser Anwesenheitssimulation beruht darauf, daß von außen nicht feststellbar ist, ob die Verbraucher von einem anwesenden Benutzer oder automatisch betätigt werden. Wenn von außen wahrnehmbar ist, daß die Verbraucher automatisch betätigt werden, ist die Abschreckungswirkung nicht mehr gegeben.

Um eine hohe Abschreckungswirkung zu erreichen, ist es bekannt (EP-A-0 436 163), von außen leicht wahrnehmbare Einschaltperioden zu vermeiden. Dazu ist gemäß der EP-A-0 436 163 vorgesehen, die Betätigung der elektrischen Verbraucher mit einer Zufallsschaltung zu bewirken. Wenn jedoch ein Verbraucher betätigt wird, dessen Betätigung bei Anwesenheit einer Person vernünftigerweise nicht erfolgen würde, verrät diese Betätigung, daß nicht eine anwesende Person, sondern eine Vorrichtung die Betätigung des Verbrauchers ausgelöst hat. Beispielsweise würde die Betätigung einer Zimmer- oder Gartenbeleuchtung tagsüber sofort erkennen lassen, daß die Anwesenheit einer Person nicht gegeben ist. Um solche, im Sinne der Abschreckungswirkung negativen Fehlbetätigungen zu vermeiden, ist aus der EP-A-0 436 163 bekannt, die Zufallsschaltung über eine Sensorvorrichtung mit Dämmerungserkennung zu aktivieren oder zu deaktivieren.

Ferner beschreibt DE 5 4 21 031 U1 ein Verfahren zur Anwesenheitssimulation.

Es hat sich jedoch gezeigt, daß es für einen Beobachter möglich ist, die mit der bekannten Vorrichtung und dem bekannten Verfahren durchgeführte Anwesenheitssimulation als solche zu erkennen.

Der Erfindung liegt daher die Aufgabe zugrunde, die Anwesenheit von Personen realitätsnah zu simulieren, und dadurch die Abschreckungswirkung der Anwesenheitssimulation zu verbessern.

Die Lösung dieser Aufgabe erfolgt erfindungsgemäß mit den Merkmalen des Anspruch 1

Gemäß der Erfindung ist vorgesehen, eine physikalische Zustandsgröße in der Umgebung des elektrischen Verbrauchers zu erfassen, in ein erstes Parametersignal umzuwandeln und mit ainem Zufallssignal zu verknüpfen. Durch diese Verknüpfung, , wird erreicht, daß nur solche Einschaltsignale erzeugt werden, die plausible Betätigungen des elektrischen Verbrauchers ergeben.

Besondere Vorteile ergeben sich, wenn mehrere Zustandsgrößen der Umgebung des elektrischen Verbrauchers mit dem Zufallssignal zur Bildung des Steuerintervallsignals verknüpft werden. Gegenüber einer nur über eine Zeitschaltuhr oder einen über einen Helligkeitssensor in Funktion gesetzten Zufallsschaltung ergibt sich dadurch der Vorteil, daß beispielsweise unnatürlich häufige Einschaltungen während der Nachtstunden vermeidbar sind, da ein aus der Verknüpfung resultierendes Steuerintervallsignal während der Nachtzeit eine Einschaltung zwar nicht ausschließt, die Häufigkeit jedoch auf einen plausiblen Wert begrenzt. Bei einer reinen Zeitschaltung wären Betätigungen des elektrischen Verbrauchers in diesem Zeitabschnitt nur durch Außerfunktionssetzung der Zufallsschaltung vermeidbar oder müßten bei eingeschalteter Zufallsschaltung auch in unplausibler Häufigkeit in Kauf genommen werden. Beides, die kategorische Nichtbetätigung eines elektrischen Verbrauchers, wie auch seine zu häufige Betätigung lassen jedoch bei einem Beobachter den Rückschluß zu, daß in einem Raum nicht eine anwesende Person, sondern eine Vorrichtung die Betätigung der elektrischen Verbraucher steuert.

Um eine besonders realistische Anwesenheitssimulation durchzuführen, sollten auch die Einschaltzeiten nicht rein zufällig bestimmt sein, sondern in Abhängigkeit von den Zustandsgrößen der Umgebung innerhalb plausibler Grenzen liegen.

Eine weitere Verbesserung wird dann erreicht, wenn zusätzlich zu den physikalischen Zustandsgrößen der Umgebung die Betätigung des elektrischen Verbrauchers über ein Betriebsartsignal gesteuert wird. Ein Betriebsartsignal ist dabei ein Festwert, der von der Art des zu betätigenden elektrischen Verbrauchers oder seinem Aufstellungsort abhängig ist. Damit lassen sich in der Realität vorhandene unterschiedliche Betriebsarten von beispielsweise Wohnzimmer- und Küchenbeleuchtungen einerseits und Treppenhaus- oder Toilettenbeleuchtungen andererseits mit größerer Realitätsnähe simulieren. Eine in einem Wohnraum aufgestellte Leuchte wird beispielsweise selten, dafür aber für lange Zeitabschnitte eingeschaltet, wohingegen eine Treppenhausbeleuchtung häufig und für eine kurze Dauer betätigt wird. Solche Betriebsarten einer Leuchte lassen sich bei dem erfindungsgemäßen Verfahren über das Betriebsartsignal erfassen.

Gemäß einer besonders bevorzugten Ausführungsform der Erfindung werden als physikalische Zustandsgrößen der Umgebung des elektrischen Verbrauchers die Umgebungshelligkeit, die Umgebungs lautstärke, die Umgebungstemperatur und/oder die Bewegungen von Infrarotstrahlern erfaßt. Ein bei Erfassung dieser Zustandsgrößen der Umgebung und in einer vorgegebenen Betriebsart betätigter elektrischer Verbraucher wird dadurch so gesteuert betätigt, daß für einen Beobachter der Eindruck entsteht, der elektrische Verbraucher würde von einer anwesenden, auf Umgebungseinflüsse reagierenden Person betätigt. Durch Berücksichtigung der Umgebungshelligkeit wird dann beispielsweise berücksichtigt, daß Lampen so lange nicht eingeschaltet werden, wie die Umgebungshelligkeit ausreichend hoch ist. Es wird ferner berücksichtigt, daß Einschaltungen während der späten Nachtstunden nur äußerst selten erfolgen, jedoch dann mit höchster Wahrscheinlichkeit, wenn sich beispielsweise ein lautes Schallereignis ereignet oder Bewegungen in einem bestimmten Bereich auftreten, Ereignisse also, die eine anwesende Person zur Reaktion veranlassen würden.

Gemäß der oben beschriebenen, besonders bevorzugten Ausführungsform der Erfindung können mehrere physikalische Zustandsgrößen der Umgebung eines elektrischen Verbrauchers erfaßt werden.

Ohne eine weitere physikalische Zustandsgröße der Umgebung des elektrischen Verbrauchers erfassen zu müssen, kann das Verfahren dadurch verbessert werden, daß die Grenzen der Dauer der Einschaltungen des Verbrauchers in einem Abhängigkeit von einem aus der Tages- bzw. Nachtzeit resultierenden Zeitsignal vorbestimmt verändert werden, so daß das zufällige Einschalten der elektrischen Verbraucher zu verschiedenen Tages- bzw. Nachtzeiten unterschiedlich lange erfolgt.

Wenn eine der erfaßten physikalischen Zustandsgrößen der Umgebung des elektrischen Verbrauchers der Geräuschpegel ist, kann das erfindungsgemäße Verfahren auch so ausgelegt sein, daß der Modus des zufälligen Einschaltens des elektrischen Verbrauchers bei Unterschreitung eines vorbestimmten Geräuschpegels aktiviert wird, insbesondere wenn der Geräuschpegel einen vorgegebenen Schwellenwert für eine vorgegebene Zeitdauer unterschreitet. Eine solche Verknüpfung ermöglicht bei vielen Anwendungsfällen einen vorteilhaften Einsatz durch Berücksichtigung der normalerweise mit Geräuschen verbundenen Umgebungsaktivitäten. Somit kann das zufällige Einschalten gemäß dieser bevorzugten Ausführungsform selbsttätig aktiviert werden, wenn sich zum Beispiel keine Personen mehr in einem Gebäude aufhalten.

Bei einer erfindungsgemäßen Vorrichtung ist die Einstellung des Betriebsartsignals über Bedienelemente, vorzugsweise über DIP-Schalter, einstellbar. Mit diesen werden zur Durchführung des erfindungsgemäßen Verfahrens in der Vorrichtung Voreinstellungen getroffen, so daß die Einschalthäufigkeit und/oder die Einschaltdauer abhängig von den physikalischen Zustandsgrößen der Umgebung einstellbar sind.

Eine wirtschaftlich vorteilhafte Ausführungsform der Erfindung läßt sich weitgehend unabhängig von der Losgröße erhalten, wenn eine Mikrocontrollerschaltung verwendet wird, insbesondere wenn die Mikrocontrollerschaltung zugleich wenigstens eine Zeitmeßschaltung umfaßt.

Dies gilt besonders dann, wenn die Mikrocontrollerschaltung zugleich eine Zufallsgeneratorschaltung umfaßt, insbesondere wenn die Mikrocontrolerschaltung zugleich wenigstens eine Ansteuerschaltung für eine Leistungsschaltung einer Schalteinheit umfaßt, die die Stromzufuhr zu dem elektrischen Verbraucher einschaltet, drosselt oder abschaltet.

Eine besonders hohe Haltbarkeit und Zuverlässigkeit der Vorrichtung wird dann erreicht, wenn die Leistungsschaltung eine Triac-Schaltung umfaßt, durch die die Stromzufuhr zu dem elektrischen Verbraucher nicht nur schaltbar sondern bei Bedarf auch variabel einstellbar ist.

Diese und weitere Merkmale und Vorteile der Erfindung ergeben sich aus den Unteransprüchen sowie aus der Beschreibung im Zusammenhang mit den Zeichnungen.

Es zeigt:

Fig. 1   ein Flußdiagramm einer ersten Ausführungsform des erfindungsgemäßen Verfahrens,

Fig. 2   ein Blockschaltbild einer ersten Ausführungsform einer Vorrichtung zur Durchführung des erfindungsgemäßen Verfahrens,

Fig. 3   ein Bedien- und Sensorfeld der Vorrichtung in Fig. 2, die als Einsetzbauteil für normgerechte Schalterdosen ausgeführt ist,

Fig. 4   eine Seitenansicht der Vorrichtung in Fig. 2 in teilweiser Schnittdarstellung,

Fig. 5   ein Blockschaltbild einer zweiten Ausführungsform einer Vorrichtung,

Fig. 6   eine Sensorbaugruppe mit mehreren Sensoren zur Erfassung von Zustandsgrößen der Umgebung,

Fig. 7   ein Blockschaltbild einer weiteren Ausführungsform einer Stromversorgung und einer Schalteinheit der Vorrichtung,

Fig. 8   ein Blockschaltbild einer anderen Ausführungsform einer Stromversorgung und einer Schalteinheit der Vorrichtung gemäß Fig. 5 in vereinfachter Darstellung,

Fig. 9      eine erste Vorrichtung zur Bestimmung der Betriebsart,

Fig. 10     eine zweite Vorrichtung zur Bestimmung der Betriebsart,

Fig. 11     ein Blockschaltbild einer dritten Ausführungsform einer Vorrichtung und

Fig. 12     ein Flußdiagramm einer zweiten Ausführungsform des erfindungsgemäßen Verfahrens.

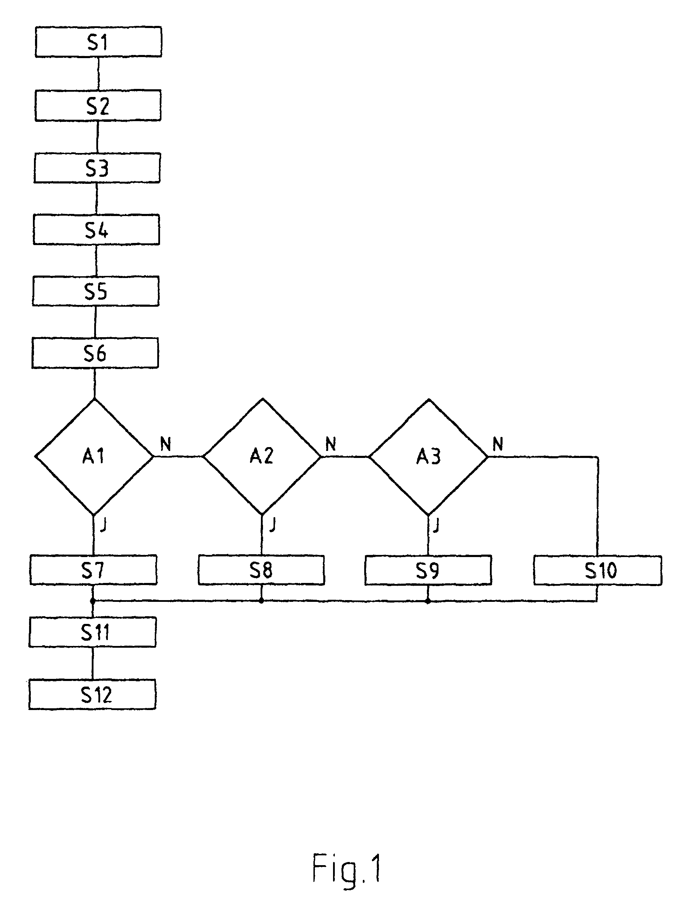

Fig. 1 zeigt ein Flußdiagramm einer ersten Ausführungsform des erfindungsgemäßen Verfahrens. In diesem Flußdiagramm sind Verfahrensschritte, bei denen Zustandsgrößen der Umgebung erfaßt werden, Signale umgewandelt und/oder Rechenvorgänge durchgeführt werden, mit S bezeichnet. Abfragen an Verzweigungsstellen im Flußdiagramm, die je nach Beantwortung der Abfrage zu einen unterschiedlichen Verfahrensergebnis führen, sind mit A bezeichnet.

Schritt S 1 bezeichnet den Beginn der Arbeit gemäß dem erfindungsgemäßen Verfahren. In Schritt S 2 werden Betriebsartvorgaben erfaßt, die beispielsweise über DIP-Schalter oder analoge Signale vorgegeben sind. In Abhängigkeit von der in Schritt S 2 erfaßten Betriebsartvorgabe wird in Schritt S 3 eine Betriebsart ausgewählt, wobei die Auswahl einer Betriebsart eine Verzweigung zu mit unterschiedlichen Werten besetzten Verfahrensvarianten darstellt.

In Schritt S 4 wird eine Zustandsgröße der Umgebung erfaßt und in Schritt S 5 in ein Parametersignal umgewandelt. In Schritt S 6 wird ein Zufallssignal gebildet.

In den Schritten A 1 bis A 3 erfolgt eine Abfrage, ob das in Schritt S 5 gebildete Parametersignal einen ersten, zweiten oder dritten Vergleichswert übersteigt. Je nach Art des in Schritt S 5 gebildeten Parametersignals wird dann in einem der Schritte S 7 bis S 10 ein Wahrscheinlichkeitswert für die Einschaltung ausgewählt, wobei diese Auswahl aufgrund des in Schritt S 6 gebildeten Zufallssignals erfolgt. Auf der Grundlage des in einem der Schritte S 7 bis S 10 ausgewählten Wertes werden in Schritt S 11 Einschaltsignale gebildet, die in Schritt S 12 an eine Schalteinheit übergeben werden. In Schritt S 12 schaltet die Schalteinheit einen elektrischen Verbraucher auf der Grundlage der in Schritt S 11 gebildeten Einschaltsignale.

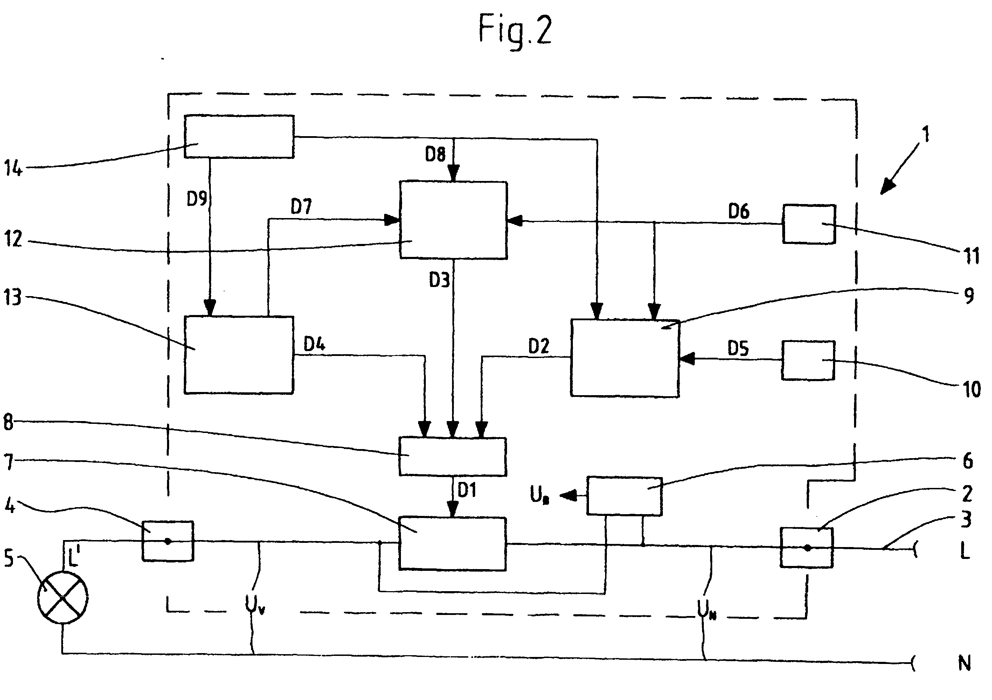

Die in den Fig. 2 bis 4 dargestellte Vorrichtung 1, die in Fig. 2 durch eine unterbrochene Linie umrandet dargestellt ist, umfaßt eine erste Anschlußklemme 2, über die die Vorrichtung 1 mit einer Stromversorgungsleitung 3 mit einer üblichen Hausinstallation verbunden ist. Über diese Hausinstallation wird die Vorrichtung 1 mit Energie versorgt.

Zwischen einem Null-Leiter N und einer Phase L der Hausinstallation liegt die Netzspannung $U_N$ an. Über eine zweite Anschlußklemme 4 ist eine Lampe 5 mit der Vorrichtung 1 verbunden. Dabei liegt zwischen dem Null-Leiter N und der von der Vorrichtung 1 beeinflußten Phase L' die Verbraucherspannung $U_V$ an.

Innerhalb der Vorrichtung 1 ist eine Stromversorgung 6 mit den Leitern L und L' verbunden. Die Stromversorgung 6 stellt die für den Betrieb der Vorrichtung 1 erforderlichen Kleinspannungen $U_B$ zur Verfügung. Die Stromversorgung 6 wird dabei von dem Spannungsabfall über einer Schalteinheit 7 mit einer integrierten Leistungsschaltung, hier einer Triac-Schaltung, gespeist.

Durch diese schaltungstechnische Anordnung der Stromversorgung 6 kann die Vorrichtung 1 ohne Änderungen auch im Austausch für einen Lichtschalter in eine Hausinstallation eingeschleift werden, bei der nur die zu schaltende oder zu beeinflussende Phase L durch die Anschlußdose geschleift ist.

Die Schalteinheit 7, die auch als Ansteuer-/Leistungsschaltung bezeichnet wird, wird mit einem Signal D1 über eine entsprechende Leitungsverbindung von einer Auswerteschaltung 8 beaufschlagt.

In Fig. 2 sind ferner eine Bewegungsmelderschaltung 9, ein Passiv-Infrarotsensor 10, ein Tageslichtsensor 11 ein Zufallsgeneratorschaltung 12, eine Zeitschaltuhr 13 und ein Bedieneinheit 14 gezeigt. D1 bis D9 bezeichnen übergebene Signale.

Über die Signale D8 und D9 können die jeweiligen Baugruppen der Vorrichtung 1 entsprechend den erwünschten Betriebsartparametern beeinflußt werden.

Die in den Fig. 2 bis 4 gezeigte Vorrichtung 1, die als Einsatz für normgerechte Schalterdosen ausgeführt ist, umfaßt eine Abdeckung 15, innerhalb der eine Anzeigeeinheit 16, eine optische Anordnung 17 und eine Mehrzahl von Tasten 18 als Bedieneinheit 14 angeordnet sind.

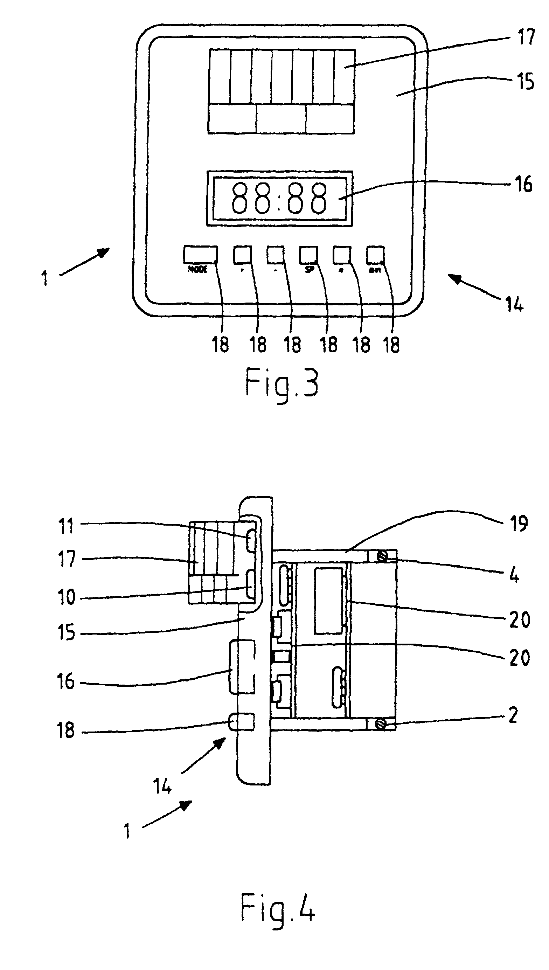

Aus Fig. 4 ist ersichtlich, daß hinter der optischen Anordnung 17 der Passiv-Infrarotsensor 10 und der Tageslichtsensor 11 angeordnet sind. Hinter der Abdeckung befinden sich in einem Gehäuse 19, das hier teilweise aufgeschnitten dargestellt ist, Leiterplatten 20 mit den Bauteilen zur Realisierung der Schaltung 1. Am Gehäuse 19 sind noch die Anschlußklemmen 2 und 4 zur Verbindung der Vorrichtung 1 mit einer Elektroinstallation und dem Verbraucher angeordnet.

Mit der in den Fig. 2 bis 4 dargestellten Vorrichtung 1 ist das in Fig. 1 in einem Flußdiagramm dargestellte Verfahren durchführbar. Dabei erfolgt eine Erfassung einer Betriebsart (Schritt S 2) durch Betätigung der Bedieneinheit 14. Die Erfassung von Zustandsgrößen (Schritt S 4) erfolgt mittels des Passiv-Infrarotsensors 10, des Tageslichtsensors 11 beziehungsweise der Zeitschaltuhr 13, wobei bei der Bildung eines Parametersignals gegebenenfalls die Bewegungmelderschaltung 9 Verwendung findet. Ein Zufallssignal wird in der Zufallsgeneratorschaltung 12 gebildet (Schritt S 6), und die Abfrage der Parametersignale (Abfrage A 1 bis A 3), die Bildung eines Wahrscheinlichkeitswertes (Schritt S 7 bis S 10) und die Bildung von Einschaltsignalen (Schritt S 11) erfolgen in der Auswerteschaltung 8. Gemäß Fig. 1 wird in Schritt S 4 lediglich eine physikalische Zustandsgröße erfaßt. .

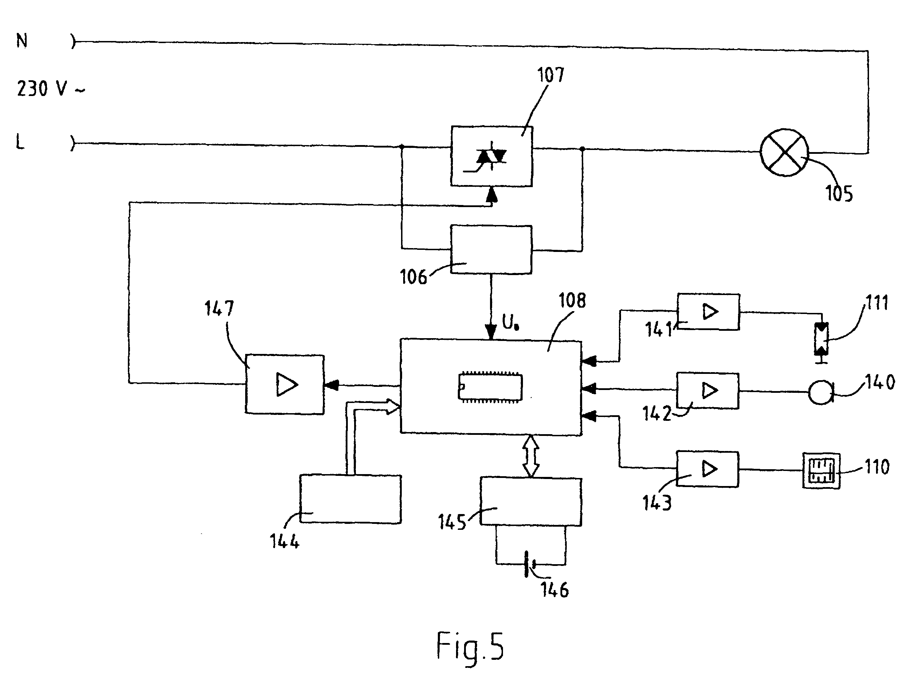

Fig. 5 zeigt ein Blockschaltbild einer zweiten Ausführungsform einer Vorrichtung 100, bei der Teile, die Teilen der Vorrichtung gemäß der ersten Ausführungsform entsprechen, mit einem Bezugzeichen versehen sind, das um 100 erhöht ist. Bei dieser Ausführungsform ist zusätzlich zu dem Tageslichtsensor 111, der ein Fotowiderstand ist, und dem Bewegungsmelder 110 ein Mikrofon 140 vorgesehen. Der Passiv-Infrarotsensor 110, der Tageslichtsensor 111 und das Mikrofon 140 sind jeweils über einen eigenen Verstärker 141, 142 und 143 mit einem als Auswerteeinheit 108 vorgesehenen Mikroprozessor verbunden. Der Mikroprozessor kann über eine Programmiereinheit 144 gesteuert werden und aus einem Speicher 145, der von einer Batterie 146 gepuffert ist, Daten abrufen. Von der Auswerteschaltung 108 wird dann über einen Verstärker 147 die Schalteinheit 107, die eine Triac-Steuerung aufweist, geschaltet.

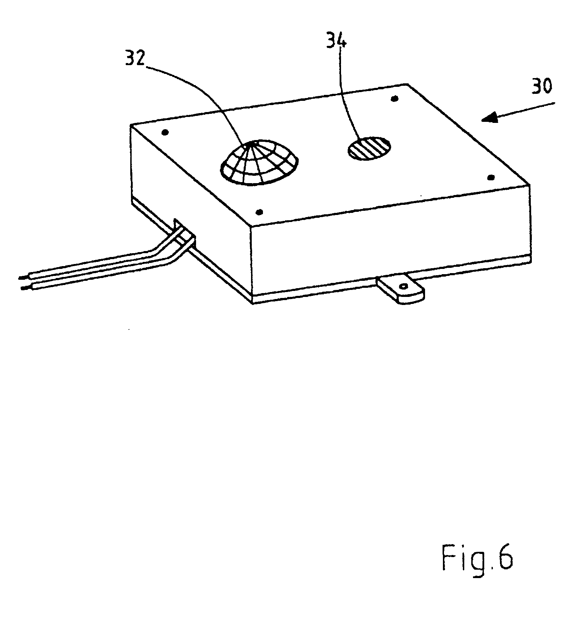

In Fig. 6 ist eine Sensorbaugruppe 30 mit mehreren Sensoren zur Erfassung von Zustandsgrößen der Umgebung gezeigt. Dabei befinden sich unter einer optischen Anordnung 32, die nach Art einer Fresnel-Linse aufgebaut ist, ein Tageslichtsensor und ein Passiv-Infrarotsensor. Unter einer Abdeckung 34 ist ein Mikrofon angeordnet.

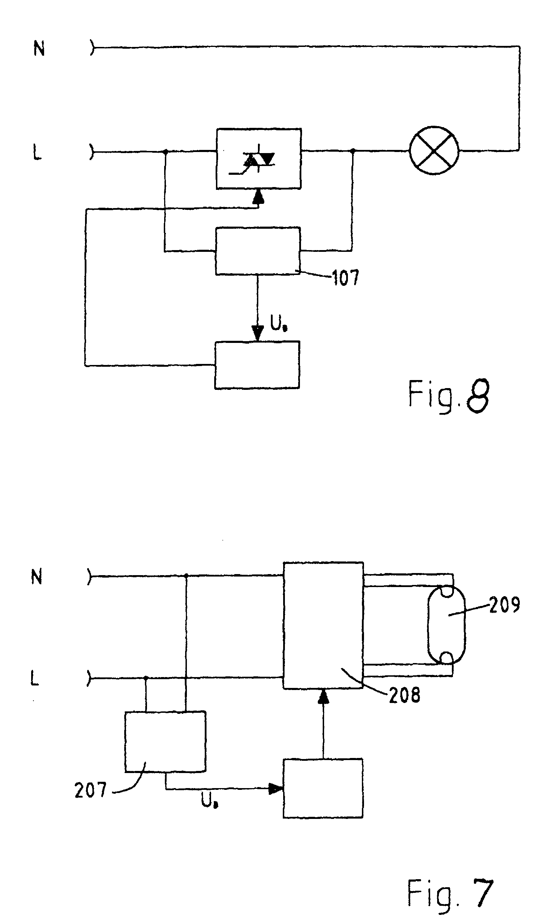

Fig. 7 zeigt eine weitere Ausführungsform einer Stromversorgung 207, die parallel zu einem Vorschaltgerät 208 für eine Entladungslampe 209 angeordnet ist.

Fig. 8 zeigt die Stromversorgung 107, wie sie gemäß der zweiten Ausführungsform einer Vorrichtung angeordnet ist, in vereinfachter Darstellung.

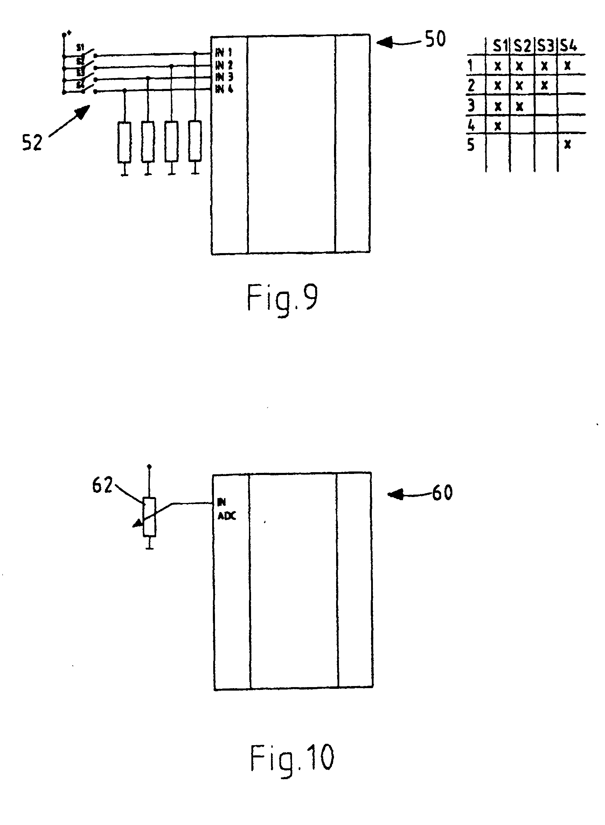

Die Fig. 9 und 10 zeigen Vorrichtungen 50 und 60 zur Bestimmung der Betriebsart, wobei in Fig. 9 DIP-Schalter 52 verwendet sind und in Fig. 10 ein Potentiometer 62 Anwendung findet.

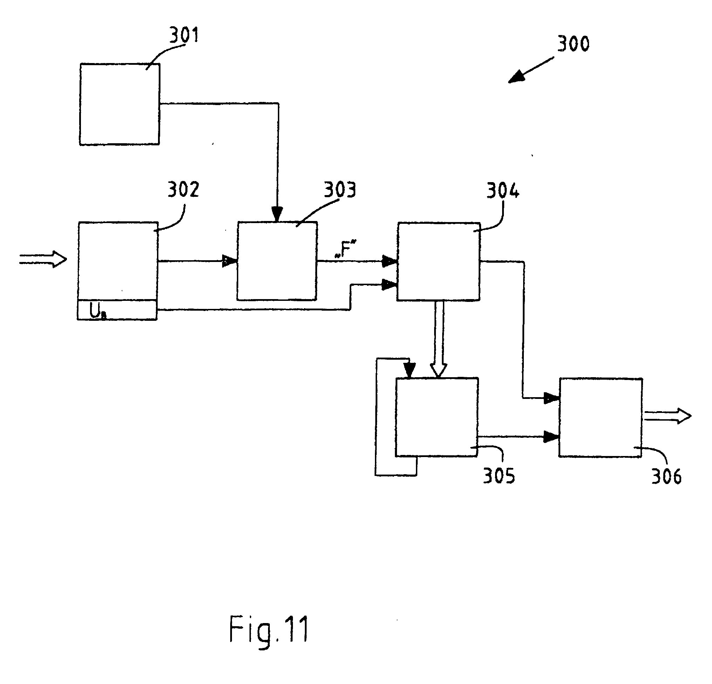

Bei der in Fig.11 gezeigten dritten Ausführungsform einer Vorrichtung 300 sind folgende Baugruppen in der in Fig. 5 gezeigten Weise miteinander verschaltet:

Ein Uhrzeit- und Kalendermodul 301, eine Datenerfassungssensorik 302, eine Auswerteschaltung 303, in welcher ein Algorithmus abgelegt ist, eine Klassifizierungslogik 304, ein Zufallsgenerator 305 und eine Ausgabeschnittstelle 306, die eine nicht dargestellte Schalteinheit steuert.

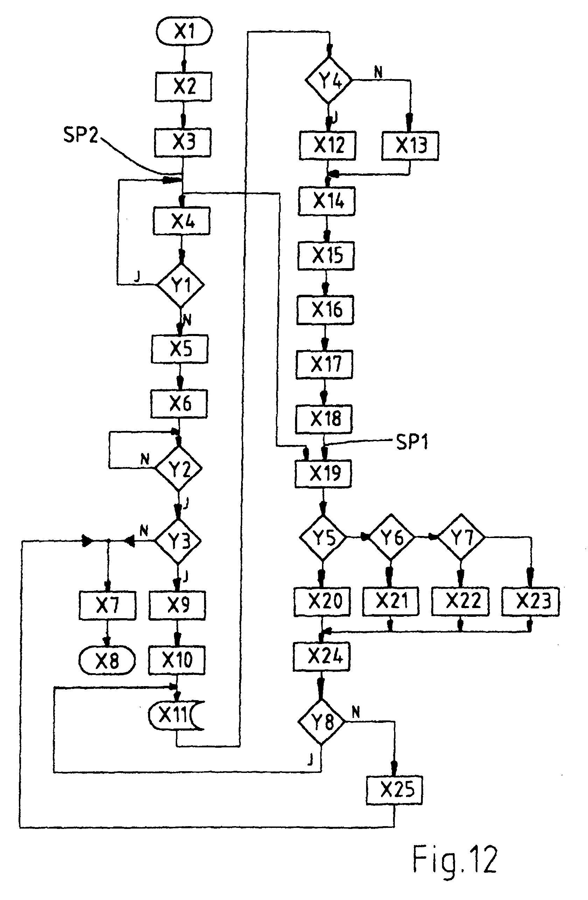

Fig. 12 zeigt das Flußdiagramm einer zweiten Ausführungsform des erfindungsgemäßen Verfahrens, wobei Verfahrensschritte mit X gekennzeichnet und in der Reihenfolge ihrer Abarbeitung numeriert sind. Dabei können einzelne Verfahrensschritte X mehrfach durchgeführt oder weggelassen werden, je nach Einstellung von Parametern, die durch Abfrage von Signalen gebildet werden. Abfragen sind mit einem Y gekennzeichnet. In den einzelnen Verfahrenssschritten X und Abfragen Y werden folgende Verfahrensschritte abgearbeitet:

X1: Start

X2: Erfassung der Betriebsart durch Abfrage von DIP-Schaltern oder Steuerparametern einer Programmiereinheit

X3: Auswahl einer Betriebsart und Bildung eines Parametersignals SP2

X4: Aktivierung eines Einschaltsignals

Y1: Abfrage, ob die Betriebsspannung $U_B$ anliegt

X5: Einschaltsignal inaktiv, Leuchtmittel aus

X6: Start einer Zeitvorgabe $\Delta T$

Y2: Abfrage, ob die Zeitvorgabe abgelaufen ist, wobei das Verfahren diese Abfrage solange wiederholt, bis die Zeitvorgabe $\Delta T$ abgelaufen ist,

Y3: Erneute Abfrage, ob die Betriebsspannung $U_B$ anliegt, wenn nicht, Übergang zu Schritt X7, wenn ja, Übergang zu Schritt X9

X7: Betrieb des Prozessors in Uhr- und Kalenderfunktion

X8: Stop

X9: Schaltung des Steuerausgangs in einen Aktivmodus

X10: Ausgabe eines Signals am Steuerausgang: 0,5 Sekunden inaktiv, dann aktiv

X11: Abfrage der Kalenderfunktionen Wochentag WT und Uhrzeit h

Y4: Abfrage, ob der Steuerausgang aktiv ist, wenn ja, Übergang zu Schritt X12, wenn nein, Übergang zu Schritt X13

X12: Übernahme des Sensorsignals für die Umgebungshelligkeit

X13: Abfrage der Umgebungshelligkeit

X14: Abfrage von Umgebungsgeräuschen

X15: Abfrage der Speicherparametervorbesetzung für Wochentag, Uhrzeit, Helligkeit und Geräusch

X16: Abfrage des Bewegungsmeldersignals

X17: Bildung von Parametersignalen und Verknüpfung dieser Parametersignale

X18: Bildung eines Steuerparameters SP1 und Übergabe an die Zufallsgeneratorschaltung

X19: Bildung eines Zufallssignals in Abhängigkeit der Steuerparameter SP1 aus Schritt X18 und SP2 aus Schritt X3

Y5 bis Y7: Abfrage der Parametersituation entsprechend der Abfrage gemäß dem Verfahren in Fig. 1

X20 bis X23: Bildung von Einschaltsignalen

X24: Übergabe der Einschaltsignale an eine Schalteinheit und Schalten der Schalteinheit zur Betätigung des elektrischen Verbrauchers

Y8: Abfrage, ob die Betriebsspannung $U_B$ anliegt, und, wenn ja, Übergang zu Schritt X11, wenn nein, Übergang zu Schritt X25

X25: Ausschaltung des Verbrauchers und Übergang zu Schritt X7

Mit der Erfindung wird also ein Verfahren zur Verfügung gestellt, bei dem die Häufigkeiten des Ein- und Ausschaltens der Beleuchtungseinrichtung zu jedem Zeitpunkt vom Zustand bestimmter definierter Umgebungs bedingungen abhängen, die über einen vorher definierten Algorithmus miteinander verknüpft wurden. Dieser Algorithmus stellt dabei eine realistische Korrelation zwischen den Umgebungs bedingungen und der Einschalthäufigkeit und Einschaltdauer her. Die Zustandsparameter der Zufallsfunktion nehmen also in Abhängigkeit von den Umgebungsbedingungen (Helligkeit und Geräusch mit Schwellwertmuster, Bewegungsmelderaktivitäten, u.s.w) stets unterschiedliche Werte an. Der Vorteil der beschriebenen Lösung liegt darin, daß nicht fest vorgegebene "Zufallsfunktionen" ablaufen (Steuerung durch Zeitschaltuhr oder Bitmuster in einem EPROM), sondern eine "gesteuerte Zufallsfunktion" erzeugt wird, die auch in ihren Zustandsparametern keine fest wiederkehrenden Perioden kennt. Die Wahrscheinlichkeitswerte können dabei durch verschiedene Umgebungsbedingungen über Sensoriken gebildet werden (z.B.: Dämmerungsfunktion , Tages-/Nachtzeiten, Geräuschpegel, u.s.w).

Durch das erfindungsgemäße Verfahren wird also eine wirkungsvollere Abschreckung gegenüber Kriminellen erhalten, da es mit dem erfindungsgemäßen Verfahren möglich ist, eine Steuerung eines oder mehrerer Verbraucher in Abhängigkeit von Umgebungsbedingungen so vorzunehmen, daß eine Anwesenheit von Personen realistisch vorgetäuscht werden kann. Ferner kann die Zufallsschaltfunkion durch ihren sich selbst auf Umgebungsbedingungen einstellenden Steueralgorithmus in Verbindung mit optimal ausgewählten Sensoriken nach Inbetriebnahme völlig ohne zusätzlichen Bedien- oder Programmieraufwand betrieben werden. Für den Anwender ist eine stets optimale Arbeitsweise unabhängig von Tageszeit, An- oder Abwesenheit, usw. gegeben.

Das erfindungsgemäße Verfahren läßt sich unter Verwendung programmierbarer Module realisieren, wobei bei der Programmierung folgendes zu beachten ist:

Eine Zufallsfunktion wird derart festgelegt, daß eine bekannte Zufallsschaltung, die im mathematischen Sinne ein zufällig erzeugtes Signal im Zustand EIN oder AUS erzeugt oder aufgrund ihrer Funktionsweise Schaltzustände erzeugt, die schließlich einen unregelmäßigen Schaltzustand erkennen lassen, durch ein oder mehrere Steuersignale oder Steuerparameter in ihrer Funktionsweise beeinflußbar ist. Diese Steuersignale oder Steuerparameter beeinflussen innerhalb der Zufallsschaltung deren Status (aktiv, nicht aktiv) und insbesondere deren Funktionsparameter. Diese Funktionsparameter können unterschiedlicher Gestalt sein, je nach dem Funktionsprinzip der Zufallsschaltung. Letztlich müssen aus dieser Steuerbarkeit der Zufallsschaltung eine unterschiedliche Häufigkeit von Ein- und Ausschaltvorgängen sowie unterschiedliche zeitliche Verhältnisse zwischen Ein- und Ausschaltzustand resultieren.

Mindestens ein Parametersignal zur Beeinflussung dieser Funktionsparameter wird aus verschiedenen Eingangswerten durch eine mathematische Verknüpfung erzeugt, d.h. ein Parametersignal S stellt sich dar als Funktion der Eingangswerte

$$S = f(Y_k), k = 1 \ldots N, \text{ N: Anzahl der Eingangswerte,}$$

wobei die Eingangswerte ihrerseits Zeitsignale x(t) darstellen.

Diese Zeit und Parametersignale lassen sich in folgende Gruppen einteilen:

Gruppe A: Zeitsignale gemäß Vorgabe nach einem Algorithmus bzw. Ablage in einem Speicher:

$$y_A(t) = \begin{cases} K_1 & 0 < t < t_1, \\ K_2 & t_1 < t < t_2 \ldots \\ K_3 \\ \vdots \\ usw. \end{cases} \quad K_1, K_2, K_3 \quad \text{Konstanten} \in R$$

Diese Zeitsignale als Eingangswerte für die Bildung des Steuersignals sind gemäß vorliegendem Anwendungsfall z.B.:

- Eingangswerte in Abhängigkeit von der Tageszeit
- Eingangswerte in Abhängigkeit von den Wochentagen
- Eingangswerte in Abhängigkeit von der Jahreszeit nach einem vorgegebenen Kalender

Gruppe B: Parametersignale erfaßt von sensorischen Elementen

$$y_B(t) = f[\alpha(t), \beta(t), \gamma(t),..]$$

Diese Parametersignale sind z.B.:

- Werte für die Umgebungshelligkeit
- Werte für den umgebenden Geräuschpegel
- Werte für die Umgebungstemperatur.

Gruppe C: Zeitsignale, die zu beliebigen Zeiten aktive oder inaktive Zustände von Sensoriken oder handbedienbaren Schaltern aufweisen können. Solche Signale sind z.B.

- Schaltersignal von einer Abwesenheitsmeldung
- Bewegungsmeldersignal innerhalb und außerhalb von Räumen
- Tür-, Fensterkontakte, Lichtschranken usw..

$$0 \quad 0<t\leq t_1$$

$$Y_c(t)= 1 \quad t_1<t\leq t_2$$

Die Verknüpfung dieser Signale erfolgt schließlich nach einem für die jeweilige Anwendung vorteilhaften Algorithmus. Die Zeitsignale nach Gruppe A sind dabei als Wichtungsfaktoren in bestimmten Zeitintervallen zu verstehen, die Parametersignale nach Gruppe B sind ihrerseits mit Wichtungsfaktoren zu beaufschlagen, die ein Zugehörigkeitsmaß der erfaßten Umgebungsbedingungen im Algorithmus darstellen. Diese Wichtungsfaktoren können ihrerseits wiederum im Sinne der Gruppe A zeitabhängige Größen als Wichtungsfunktionswerte darstellen. Zeitsignale nach Gruppe C sind im Unterschied zu den anderen Eingangswerten zur Änderung bestimmter Betriebsmodi geeignet, z.B. zur Aktivierung von Alarmfunktionen.

Die Bildung der Wahrscheinlichkeitswerte F kann somit wie folgt dargestellt werden:

$$F=f(t) = f \{y_{Ai}(t), w_j(t) \, y_{Bj}(t), y_{Ck}(t)\}$$

$i = 1 ... N_1$      $N_1$ Anzahl Zeitsignale Gruppe A
$j = 1 ... N_2$      $N_2$ Anzahl Parametersignale Gruppe B
$k = 1 ... N_3$      $N_3$ Anzahl Zeitsignale Gruppe C
$w_j(t)$: Zugehörigkeitsmaß zum Zeltsignal j, zeitunabhängig oder zeitabhängig.

Die Wahl der zu verwendenden mathematischen Verknüpfungen bestimmt letztlich den Wertebereich der Wahrscheinlichkeitswerte, dabei sind definierte Wertebereiche bestimmten Funktionsparametern und Betriebsmodi zuzuordnen. Solche Funktionsparameter bzw. Betriebsmodi sind wie folgt definiert:

- Häufigkeit der Einschaltungen
- Dauer der Einschaltungen
- Helligkeitsstufe der Einschaltungen (Leistungssteuerung, dimmen)
- Anzahl der Verbraucher/Leuchtmittel
- Ort der Verbraucher/Leuchtmittel
- Alarmfunktionen, wie Sirene, Warnlicht, Blinklicht

Eine effiziente, hardwaremäßige Umsetzung der erfindungsgemäßen Aufgabenstellung läßt sich durch Einsatz einer Mikrocontrollerschaltung erreichen, insbesondere, wenn die Mikrocontrollerschaltung zugleich entsprechende Verarbeitungskanäle für analoge Signale, sowie wenigstens eine Zeitmeßfunktion umfaßt. Die Realisierung des notwendigen Algorithmus läßt sich somit innerhalb eines digitalen Systems nach den bekannten Methoden einer digitalen Signalverarbeitung umsetzen.

Ein digitales System wird durch einen Algorithmus definiert, der einer Eingangszahlenfolge $x(n)$ eine Ausgangszahlenfolge $y(n)$ zuordnet

$$( y(n) = S \{x(n)\}, \text{ S: Systemoperator).}$$

Da stets diskrete Zeitsignale $x(\Delta t)$ betrachtet werden, sind sie lediglich an diskreten, äquidistanten Zeitpunkten $t_n = n \, \Delta t$ definiert ($\Delta t$ Taktperiode).

Die Ausgangszahlenfolge stellt in ihren diskreten Werten ein digitales Steuersignal dar, mit einer Auflösung gemäß der konzipierten Verarbeitungsbreite (z.B. 8 Bit).

Die einzelnen zu verarbeitenden Zeit- und Parametersignale sind wie folgt darstellbar:

Gruppe A:

$$Y_{Ai} (n) = K_i (\Delta T_i)$$

(vorprogrammiertes Bitmuster z.B. $K_i$ über die Tageszeit im Abstand $\Delta T_i$)

i= 1 ...N1          N1 Anzahl der Zeitsignale in Gruppe A
$K_i$                Konstante i-tes Zeitsignal
$\Delta T_i$                Stützstellenabstand
$\Delta T_i = t_{pi} / A_i$ mit    $t_{pi}$ Periodendauer des i-ten Zeitsignals
                                 Ai Auflösungsparameter (Zahl der Stützstellen pro Periodendauer)

Bsp.: Zeitsignale Gruppe A/Parameter-Vorbesetzung, Zeitsignale Wochentag $Y_{WT}$
i = 1 (1. Zeitsignal, Wochentage WT)
$\Delta T_1 = 24$ h (Stützstellenabstand)
$\Delta T_1 = t_{P1}/A_1$      $A_1 = 1$ (Stützstellen/Tag)
     $t_{P1} = 24$ h (Periode 1 Tag)

|  | Mo | Di | Mi | Do | Fr | Sa | So |
|---|---|---|---|---|---|---|---|
| WT-Kennung | 01 | 02 | 03 | 04 | 05 | 06 | 07 |
| $Y_{WT}$ | 05 | 05 | 05 | 05 | 07 | 09 | 08 |

Bsp.: Zeitsignal Stunde $Y_h$
     Variante/Küche SP = $\varnothing 1$

| SP1: 01 "Küche" | | | | | | | | | | | | | | | | | | | | | | | |
|---|---|---|---|---|---|---|---|---|---|---|---|---|---|---|---|---|---|---|---|---|---|---|---|
| h | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| $Y_h$ | 01 | 01 | 01 | 01 | 02 | 03 | 06 | 09 | 06 | 01 | 00 | 00 | 00 | 00 | 00 | 00 | 01 | 03 | 09 | 09 | 06 | 06 | 05 | 02 |

i = 2 (2. Zeitsignal, Stunde h)

$\Delta T_2 = 1$ h (Stützstellenabstand)

$\Delta T_2 = t_{P2}/A_2$   $A_2 = 1$ (1 Stützstelle/h)

$t_{P2} = 1$ (Periodendauer 1h)

Wertebereich:

$Y_h = 01 ...09$

01: niedrige Schaltwahrscheinlichkeit

09: sehr hohe Wahrscheinlichkeit, lange Einschaltzyklen

Gruppe B:

$$Y_{Bi}(n) = w_i(\Delta T_i)x_{Bi}(n)$$

$i = 1... N2,$   N2 Anzahl der Zeitsignale (Zahlenfolgen) Gruppe B

$w_i(\Delta T_i)$:   Wichtungsfaktor, Zugehörigkeitsmaß i-te Zahlenfolge

$x_{Bi}(n)$:   i-te Zahlenfolge eines Zeitsignals Gruppe B

Bsp.: Zeitsignale Gruppe B/Parameter-Vorbesetzung für Wichtungsfaktor einer Zustandsgröße $W_i(\Delta Ti)$

Variante "Küche", SP1=$\varnothing$1

erste Zustandsgröße, i=1

$\Delta T = 1$h

Wertebereich $\varnothing$1... $\varnothing$9

EP 0 862 772 B1

| SP1: 01 "Küche" | | | | | | | | | | | | | | | | | | | | | | | |
|---|---|---|---|---|---|---|---|---|---|---|---|---|---|---|---|---|---|---|---|---|---|---|---|
| $\Delta T_1$ | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| $W_1$ $(\Delta T_1)$ | 05 | 05 | 05 | 05 | 05 | 07 | 09 | 09 | 09 | 09 | 07 | 05 | 05 | 05 | 05 | 05 | 05 | 06 | 08 | 09 | 09 | 09 | 07 | 05 |

Wichtungsfaktor"$\varnothing 1$" unterdrückt die Wertigkeit, bei "$\varnothing 9$" dominiert der Abtastwert der Zustandsgröße
Beispiel: physikalische Zustandsgröße "Helligkeit"

1. Variante:

- 19 Uhr, Sommer
- n-ter Abtastwert Helligkeit $X_{B1}$ (n) = 1 (hell)
- Wichtungsfaktor = $\varnothing 9$

$$Y_{Bi}(n) = W_1(\Delta T_1)X_{B1}(n) = 9 \times 1 = 9;$$

niedriger Wert, niedrige Schaltwahrscheinlichkeit

2. Variante:

- 19 Uhr, Winter
- n-ter Abtastwert Helligkeit $X_{B1}$ (n) = 9 (dunkel)
- Wichtungsfaktor = $\varnothing 9$

$Y_{B1}$ (n) = 9 × 9 = 81; hoher Wert, hohe Schaltwahrscheinlichkeit

Gruppe C:

$$Y_{Ci}(n) = X_{Ci}(n) = {}^0_1 \text{ (Schaltzustände/Signalzustände)}$$

Der Abruf des vorprogrammierten Bitmusters der Zahlenfolgen nach Gruppe A erfolgt durch die interne oder externe Zeitmeßschaltung. Die Zahlenfolgen der Gruppe B werden durch A/D-Wandlung der Zeitsignale der jeweiligen Sensoriken und die Zahlenfolgen der Gruppe C durch digitale Inputs dem Prozessor zur Verfügung gestellt.
Neben einer mikroprozessorinternen Zeitmeßschaltung für die Zeitsignale der Gruppe A werden die Zeit und Parametersignale der Gruppen B und C durch Sensoren und mechanische Betätigungselemente erzeugt und dem Mikroprozessor, je nach Typ des Ausgangssignals, analog oder digital zur Verfügung gestellt.
Als grundsätzliche Sensorik der Gruppe B ist ein Dämmerungsschalter vorgesehen, dessen Ausgangssignal die umgebungshelligkeitsabhängige Parametrierung des Zufallsschalters vornimmt. Als Sensor dient vorteilhafterweise ein Fotowiderstand, da er, in einen Spannungsteiler integriert, sofort ein auswertbares Signal liefert ( z.B. 1... 5V).
Zur Vermeidung von Fehlerkennungen bei leuchtmittelnahem Einbau des Sensors in einer Leuchte wird sein Signal durch den Prozessoralgorithmus ignoriert, wenn die Einschaltzeit für das Leuchtmittel aktiv ist.
Denkbar ist auch der Einsatz von Temperatursensoren und die Einbindung der zeitabhängigen Umgebungstemperatur in den Steueralgorithmus für die Zufallsfunktion. Die längere Abwesenheit von Personen ist besonders in den Wintermonaten durch abgesenkte Wohnraumtemperaturen detektierbar, da die Heizungsanlage meist in Sparfunktion betrieben wird.
Vorteilhaft läßt sich in Verbindung mit dem erfindungsgemäßen Verfahren ein Bewegungs- bzw. Personenmelder einsetzen. Er liefert ein Zustandssignal der Gruppe C und verwendet einen PIR-Sensor (Passiv-Infrarot-Sensor) oder Durchstrahl- bzw. Reflexionslichtschranken, vorteilhafterweise im IR-Bereich. Dabei sind zwei Möglichkeiten gegeben:

a) Sensorik in Verbindung mit der Elektronikbaugruppe bzw. der Leuchte selbst.
Eine Detektion signalisiert die Anwesenheit von Personen:

Variante 1: Anwesenheit ist legal (z.B. Abwesenheitsfunktion inaktiv). Dann reagiert die Baugruppe als normaler Bewegungsmelder und schaltet das Leuchtmittel ein, auch in Nachtriggerfunktion.
Variante 2: Anwesenheit ist illegal (z.B. Abwesenheitsfunktion aktiv). Dann reagiert die Baugruppe mit Alarmzuständen.
Variante 3: Keine Detektion. Dann aktiviert die Baugruppe die Zufallsschaltfunktion nach vorgegebenem Algorithmus.

b) Sensorik extern (auch außerhalb eines Hauses bzw. einer Wohnung) und Anbindung an die Elektronik über eine Signalleitung oder ein BUSSystem (z.B. auch innerhalb eines Gebäudeleitsystems)

Variante 1: Anwesenheit ist legal (z.B. Abwesenheitsfunktion inaktiv) Dann reagiert die Baugruppe ohne Beeinflussung einer aktiven Zufallsschaltfunktion.
Variante 2: Anwesenheit ist illegal (z.B. Abwesenheitsfunktion aktiv). Dann reagiert die Baugruppe mit Zufallsschaltfunktion und startet mit sofortigem Einschalten von Leuchtmitteln.
Variante 3: Keine Detektion. Dann aktiviert die Baugruppe die Zufallsschaltfunktion nach vorgegebenem Algorithmus.

Eine kompakte Baugruppe innerhalb einer Wohnraumleuchte als Ausführungsbeispiel ist mit folgenden Funktionen und Sensoriken ausgerüstet:

- Mikroprozessor mit interner Uhr- und Wochentagsfunktion, Funktionsund Datenerhalt über Stützbatterie oder Kondensator
- Sensor für Umgebungshelligkeit (Dämmerungsfunktion)
- Sensor für Umgebungsgeräusche
- PIR-Bewegungsmelder in Verbindung mit der Leuchte

Als Verknüpfungsfunktion für das Steuersignal F ergibt sich:

$$F=f(Y_h, Y_{Wt}, W_1(t)\ Y_H, W_2(t)\ Y_G, Y_{PIR})$$

Für die Ablegung von Bit-Mustern für die Parameter-Vorbesetzung im Festwertspeicher eines Mikroprozessors seien folgende Rechenregeln mit Wertebeispielen der Signale nach Gruppen A, B und C ausgeführt:

Beispiel (1):

Uhrzeit: 19 Uhr $\qquad$ $Y_h=\varnothing 9$
Wochentag: Montag $\qquad$ $Y_{wt}=\varnothing 5$
Zustandsgröße Helligkeit: $x_H(u)=\varnothing 9$ (dunkel)
Wichtungsfaktor bei 19 Uhr: $W_1(\Delta T_1)=\varnothing 9$ (sehr wichtig)
Zustandsgröße Geräusche $x_G(u)=\varnothing 9$ (ruhig)
Wichtungsfaktor (konstant) $w_2=\varnothing 5$
z.B.: $F=(\varnothing 9 + \varnothing 5+(\varnothing 9\ \varnothing 9)+ (\varnothing 5\ \varnothing 9)/Q$
Q = Normierungsfaktor ... (max. Wert von F) = (9+5+81+45)/180 = 0,77, hoher Wert (max. 1), d.h., hohe Einschalthäufigkeit

Beispiel (2):

Uhrzeit: 23 Uhr $Y_h=\varnothing 5$
Wochentag: Montag $Y_{Wt}=\varnothing 5$
Zustandsgröße Helligkeit $X_H(n)=\varnothing 9$ (dunkel)
Wichtungsfaktor 23 Uhr $W_1 (\Delta T_1)= \varnothing 5$ (wichtig)
Geräusch wie in Beispiel (1)
$F=(\varnothing 5+\varnothing 5+(\varnothing 5\ \varnothing 9)+(\varnothing 5\ \varnothing 9))/180 = 0,55$, mittlerer Wert, d.h., mittlere Einschalthäufigkeit.

## Patentansprüche

1. Verfahren zur Anwesenheitssimulation mit mindestens einem automatisch betätigten elektrischen Verbraucher (5; 105), bei dem
während der Anwesenheitssimulation eine erste physikalische Zustandsgrösse der Umgebung des elektrischen Verbrauchers (5;105) erfasst und in ein erstes Parametersignal umgewandelt wird,
mittels einer Zufallszahlengeneratorschaltung (12) ein Zufallssignal erzeugt wird,
wobei das erste Parametersignal mit dem Zufallssignal verknüpft wird,
wobei aufgrund der Verknüpfung von einer Schalteinheit (7;107) die Stromzufuhr zu dem elektrischen Verbraucher (5; 105) derart eingeschaltet wird, dass die Einschaltungen mit niedriger oder hoher Wahrscheinlichkeit in Abhaengigkeit von dem Parametersignal erfolgen,

wobei das Parametersignal zu verschiedenen niedrigen oder hohen Wahrscheinlichkeitswerten führt, die die Wirksamkeit des Zufallssignals beeinflussen.

**2.** Verfahren nach Anspruch 1, **dadurch gekennzeichnet, dass** mindestens eine weitere physikalische Zustandsgrösse der Umgebung des elektrischen Verbrauchers erfasst und in ein weiteres Parametersignal umgewandelt wird, und dass jedes der weiteren Parametersignale mit dem ersten Parametersignal und dem Zufallssignal verknüpft wird.

**3.** Verfahren nach Anspruch 1 oder 2, **dadurch gekennzeichnet, dass** die in das erste oder eines der weiteren Parametersignale umgewandelte physikalische Zustandsgrösse die Umgebungshelligkeit, die Umgebungslautstärke, die Umgebungstemperatur oder die Bewegung bewegter Infrarotstrahler in der Umgebung ist.

## Claims

**1.** A method of presence simulation with at least one automatically actuated electric consumer (5;105), in which

during the presence simulation, a first physical state variable of the environment of the electric consumer (5; 105) is detected and converted into a first parameter signal,

a random signal is generated by means of a random number generator circuit (12),

with the first parameter signal being linked with the random signal,

with the power supply to the electric consumer (5; 105), based on the linkage of a switching unit (7; 107) being switched on in such a manner that the switch-on operations take place with a high or a low probability in dependence of the parameter signal,

with the parameter signal leading to various low or high probability values that influence the effectiveness of the random signal.

**2.** The method of claim 1, **characterized in that** at least one further physical state variable of the environment of the electric consumer is detected and converted into a further parameter signal, and that each of the further parameter signals is linked with the first parameter signal and the random signal.

**3.** The method of claim 1 or 2, **characterized in that** the physical state variable converted into the first or any one of the further parameter signal/s, is the surrounding brightness, the surrounding loudness, the ambient temperature or the movement of moved infrared radiators in the environment.

## Revendications

**1.** Procédé pour la simulation de présence comportant au moins un consommateur électrique (5 ; 105) actionné automatiquement, dans lequel

pendant la simulation de présence, une première grandeur d'état physique de l'environnement du consommateur électrique (5 ; 105) est déterminée et transformée en un premier signal de paramètre,

un signal aléatoire est généré au moyen d'un circuit générateur de nombres aléatoires (12),

le premier signal de paramètre étant combiné avec le signal aléatoire,

l'alimentation en électricité du consommateur électrique (5 ; 105) étant mise en circuit de manière telle que les mises en circuit s'effectuent avec une faible ou forte probabilité en dépendance de ce signal de paramètre, en raison de la combinaison avec une unité de connexion (7 ; 107),

le signal de paramètre conduisant à différentes valeurs de probabilité faibles ou fortes qui influent sur l'efficacité du signal aléatoire.

**2.** Procédé selon la revendication 1, **caractérisé en ce que** au moins une grandeur d'état physique additionnelle de l'environnement du consommateur électrique est déterminée et transformée en un signal de paramètre additionnel et que chacun des signaux de paramètre additionnels est combiné avec le premier signal de paramètre et le signal aléatoire.

**3.** Procédé selon la revendication 1 ou 2, **caractérisé en ce que** la grandeur d'état physique transformée en un premier signal de paramètre ou en l'un des signaux de paramètre additionnels, est le niveau d'éclairage de l'environnement, le volume sonore de l'environnement, la température de l'environnement ou le mouvement dans l'environnement de sources en mouvement de rayons infrarouges.

Fig.1

# Fig.2

EP 0 862 772 B1

Fig.3

Fig.4

N

230 V ~

L

107

106

108

U₀

147

144

145

146

141

142

143

111

140

110

105

Fig.5

EP 0 862 772 B1

19

Fig.6

N

L

107

U,

Fig.8

N

209

208

L

207

U,

Fig. 7

|   | S1 | S2 | S3 | S4 |
|---|----|----|----|----|
| 1 | x  | x  | x  | x  |
| 2 | x  | x  | x  |    |
| 3 | x  | x  |    |    |
| 4 | x  |    |    |    |
| 5 |    |    |    | x  |

Fig.9

Fig.10

Fig.11

Fig.12